# DEMANDE DE BREVET EUROPEEN

(11) **EP 1 300 985 A2**
(43) Date de publication de la demande: **09.04.2003**
(21) Numéro de dépôt: 02292234.8
(22) Date de dépôt: 12.09.2002
(51) Int. Cl.: H04L 12/26

(54) **Procédé et dispositif de simulation du comportement d'un réseau, permettant un dimensionnement à la demande**

(30) Priorité: 27.09.2001 FR 0112450
(71) Demandeur: ALCATEL, 75008 Paris (FR)
(72) Inventeur: Dotaro, Emmanuel, 91370 Verrieres le Buisson (FR); Douville, Richard, 91220 Bretigny sur Orge (FR)
(74) Mandataire: Chaffraix, Sylvain

(57) **Abrégé**

L'invention permet une simulation du comportement d'au moins un réseau (R) comportant un ensemble d'éléments de réseau, par introduction dans le réseau d'au moins un flux (F) paramétré destiné à simuler une contrainte sur l'un au moins des éléments du réseau.

Ce flux peut modéliser la variation dans le temps de l'intensité de trafic dans le réseau (R) vis-à-vis du ou de chaque élément auquel un flux est destiné dans le cadre de la simulation, et peut présenter une modulation sur une échelle macroscopique de temps et des fluctuations stochastiques sur une échelle microscopique.

L'invention prévoit en outre un dimensionnement à la demande d'un réseau en rehaussant, au cours de la simulation, les niveaux de performances des éléments ayant manifesté une faiblesse vis-à-vis du flux lors de la simulation.

Le domaine d'application vise tout type de réseau : données en mode circuit ou paquet, électronique ou optique, voire des réseaux de transport de commodités immatérielles et matérielles.

## Description

L'invention a pour objet un procédé et un dispositif de simulation destiné à l'étude et à la planification de réseaux, permettant au besoin un dimensionnement à la demande du réseau. Elle s'applique à tout type de réseaux: mobiles, paquets, transmissions continues, réseaux optiques, par exemple du type à multiplexage par division de longueur d'onde, avec ou sans connexion sur réseaux électroniques, etc.

La simulation visée peut prendre en compte des échelles de temps relativement importantes (par exemple des cycles journaliers ou au-delà) et un éventail d'événements dynamiques (trafic, protocole, etc.) associés à des plans de contrôle et de données.

La modélisation et la simulation de systèmes de télécommunications, pour citer un exemple où on exploite des réseaux, attirent un intérêt croissant en raison de leur complexité (grande capacité, variabilité du trafic, coût de simulation dans un réseau réel). Le but recherché est de prévoir des performances, de comparer des solutions avant qu'elles ne soient réellement mises en oeuvre et, de façon plus générale, de réduire les coûts et d'améliorer l'optimisation et le dimensionnement des réseaux.

On constate par ailleurs qu'avec la convergence des réseaux de télécommunication et de distribution de données, il devient nécessaire de pouvoir analyser le degré élevé de complexité des modèles afin d'évaluer les différentes solutions possibles et de déterminer ainsi les meilleures orientations.

Pour ce genre de tâche, deux approches sont utilisées dans l'état de l'art, dites respectivement statique et par paquet.

L'approche statique est surtout destinée à des réseaux qui fonctionnent en mode circuit, c'est-à-dire avec des données continues, et utilise des matrices de simulation statiques. Dans ce cas, les flux éventuels entre deux points sont considérés comme des entités invariables dans le réseau. Ces outils ne permettent donc pas de capturer toutes les dynamiques du réseau, les protocoles, ainsi que la variance du trafic, qui est de nos jours prépondérante.

Plus particulièrement, les outils statiques ne peuvent pas appréhender les contraintes réalistes liées par exemple au protocole Internet (IP) ou à d'autres réseaux de paquets sur des ressources optiques ou électroniques, dont les contraintes dues à :
- la variation du trafic dans le temps et dans l'espace,
- les mécanismes dynamiques: création de ressources et reconfiguration du réseau à la demande, ingénierie de trafic (équilibrage de charge, contrôle des congestions, cloisonnement du trafic), la protection ou la restauration du réseau, ...), et
- les réseaux de transport de paquets (comportement des noeuds périphériques).

En général, les outils statiques sont basés sur des procédés d'optimisation longs à calculer, sans contraintes de temps réel. Ces lacunes se font ressentir dans les résultats, qui manquent de cohérence et de fiabilité par rapport à la réalité.

La seconde approche est dite « approche par paquets ». Des exemples de telles approches sont donnés dans les documents « *Optical packet switching with mutiple path routing »,* de Gerardo Castanon, Lubo Tancevski et Lakshman Tamil, *« Modeling and Simulating communication network : a hands-on approach using OPNet »,* de I. Katzela.

Avec l'approche par paquet, on peut obtenir théoriquement des analyses qui sont beaucoup plus fines et qui, dans l'absolu, permettraient de capturer tous les paramètres d'un réseau. Cependant, elle pose un problème de temps de calcul en raison du nombre vite rédhibitoire du nombre de calculs nécessaire. La modélisation par paquet est notamment non envisageable pour des simulations portant sur des réseaux dit "Terabit" (qui gèrent plus d'un Tera bit (10¹² bits) par seconde) et sur des variations à long terme du trafic (exprimées en heures ou en jours), car le nombre absolu de calculs de simulation serait très au-delà des possibilités actuelles. A titre indicatif, une simulation au niveau paquet pour un modèle de réseau de 100 Tera bits/s avec des évolutions sur une échelle de 24 heures nécessiterait le calcul de plus de 10¹⁶ événements.

Le dimensionnement des composants de noeud réalisé à partir d'une analyse par paquet est donc généralement influencé par des considérations prises seulement sur un faible rayon. Cependant, les quantités de ressources (et donc le dimensionnement et les coûts) dépendent principalement de grandes variations.

L'analyse par paquet ne peut s'appliquer aux modèles fonctionnant en dépendance mutuelle avec des réseaux basés sur des circuits (considérations de comportement du noyau), et est limitée pour des réseaux destinés aux paquets optiques.

Par ailleurs, la granularité trop fine du niveau paquet ne permet pas l'étude du réseau à une échelle de temps réaliste. (Pour mémoire, la granularité est une quantification de l'information de base commutée dans un réseau, et relève du type de réseau: elle peut correspondre par exemple à la longueur d'onde élémentaire pour un réseau multiplexé en longueur d'onde, à une fibre dans le cas d'un réseau de fibres, à un paquet dans un réseau à commutation de paquets, etc. La granularité peut être spectrale, spatiale, temporelle ou autre.)

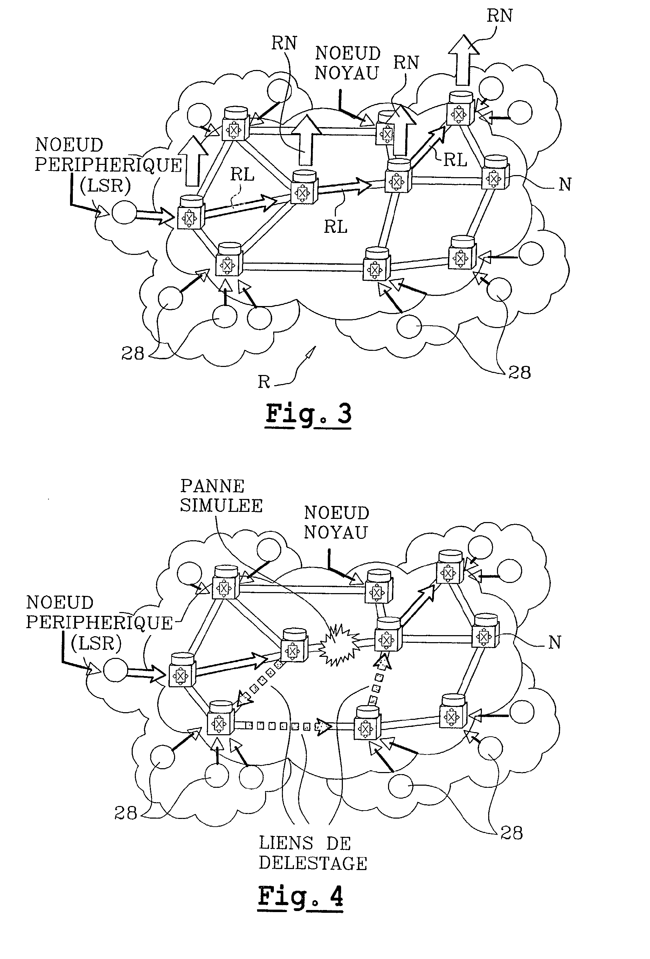

Ainsi, dans le document « *Modeling and simulating communication networks : an hands-on approach using OPNet »* de I. Katzela, sur la figure 4-6, on voit clairement que la simulation n'a été effectuée que sur un intervalle de 30 secondes.

De ce fait, les opérateurs de réseaux classiques analysent un réseau sur des bases statiques et réalisent ensuite une optimisation combinatoire, par exemple avec des outils de conversion linéaire ou analogue. Lorsqu'ils effectuent une analyse par paquets, il leur est tout au plus possible d'examiner quelques noeuds, mais jamais un réseau dans son ensemble, et pas avec tous les protocoles susceptibles d'être utilisés. Au mieux, certains parviennent à simuler simplement le plan de contrôle, c'est-à-dire la signalisation entre les noeuds du réseau.

Il est impossible donc de prendre en compte d'éventuels nouveaux protocoles ou de mécanismes pour des transports de données, par exemple de futurs paquets optiques sur un réseau optique.

Dans les deux approches, il est nécessaire non seulement de décrire la topologie du réseau avant la simulation, mais aussi de fixer les ressources dans chacun des éléments, soit la capacité des liens et les équipements des noeuds.

La simulation selon les techniques classiques ne peut alors que rendre compte des états du réseau durant la simulation. Ce n'est qu'après la simulation complète et l'analyse des comptes-rendus que l'on peut savoir si la conception et la planification du réseau sont adaptées aux conditions du scénario de simulation.

Au vu de ce qui précède, l'invention propose, selon un premier aspect, un procédé de simulation du comportement d'au moins un réseau comportant un ensemble d'éléments de réseau, caractérisé en ce qu'il consiste :
- à élaborer et à introduire dans le réseau au moins un flux paramétré destiné à simuler une contrainte sur l'un au moins des éléments du réseau.
- à détecter le comportement du réseau en réponse à au moins une contrainte imposée par ce ou ces flux ;

De préférence, on élabore le flux sur la base d'une modélisation de la variation dans le temps de l'intensité de trafic dans le réseau vis-à-vis du ou de chaque élément auquel un flux est destiné dans le cadre de la simulation.

On peut alors élaborer le flux sous forme d'un ensemble de flux, dont chaque membre correspond à un trafic sur une portion de trajet élémentaire reliant une paire respective de noeuds spécifiée du réseau.

Dans le mode de réalisation préféré, le procédé comprend une étape de réalisation de matrice de flux, dont chaque élément exprime une variation dans le temps de l'intensité de flux sur une portion de trajet respective du réseau, les flux étant introduits dans le réseau conformément à cette matrice.

Avantageusement, on imprime sur le flux une variation stochastique.

Le flux peut exprimer une variation d'intensité de trafic sur une échelle de temps macroscopique relativement à la durée de son transit dans le réseau.

Cette variation peut porter sur des évolutions de flux sur une échelle de temps macroscopique simulant plusieurs heures d'utilisation réelle du réseau, notamment sur un cycle d'exploitation journalier du réseau simulé.

De préférence, on crée pour un flux une modulation d'intensité à l'échelle macroscopique à laquelle on impose des variations stochastiques locales de flux sur une échelle de temps microscopique.

La variation stochastique du flux peut être établie conformément à une distribution exponentielle, de préférence une distribution de Poisson.

De préférence, on caractérise le flux par au moins l'un des paramètres suivants:
- un débit moyen,
- la variance du débit,
- le paramètre de Hurst, et
- un paramètre qualitatif, notamment la classe de service requise par le flux.

Selon un mode de réalisation préféré, le procédé comporte en outre les étapes de:
- identification d'une éventuelle faiblesse d'au moins un élément face à la contrainte, et
- modification le cas échéant d'au moins un élément témoignant de ladite faiblesse de façon à lui permettre d'accommoder la contrainte l'ayant révélée, notamment en rehaussant le dimensionnement d'une caractéristique de performance de l'élément.

On peut ainsi réaliser un dimensionnement à la demande d'un réseau, ou d'un ensemble de réseaux.

Ces étapes de détection, d'identification et de modification peuvent être exécutées en concomitance avec l'introduction de flux dans le réseau.

Typiquement, l'élément du réseau est un noeud et/ou un lien.

Le procédé peut réitérer au moins une fois l'introduction de flux dans le réseau afin de simuler à chaque itération une variation statistique du flux, cette variation statistique étant obtenue notamment sur la base de la nature stochastique du flux.

Selon un deuxième aspect, l'invention concerne le procédé tel qu'exposé, mis en oeuvre pour établir le dimensionnement des performances d'un réseau initialement vierge pour lequel est spécifié une topologie de noeuds et de liens, caractérisé en ce que l'on introduit dans le réseau un flux vis-à-vis duquel il doit être dimensionné, et en ce que l'on réalise les étapes de détection, d'identification et de modification précitées jusqu'à obtenir le dimensionnement conforme au flux.

Selon un troisième aspect, l'invention concerne le procédé tel qu'exposé, mis en oeuvre pour établir un nouveau dimensionnement des performances d'un réseau existant, caractérisé en ce que l'on introduit dans le réseau un flux vis-à-vis duquel il doit être dimensionné, et en ce que l'on réalise les étapes de détection et, le cas échéant, d'identification et de modification précitées jusqu'à obtenir un dimensionnement actualisé conforme au flux.

Selon un quatrième aspect, l'invention concerne le procédé tel qu'exposé, mis en oeuvre pour établir un dimensionnement des performances d'un réseau face à une panne simulée, caractérisé en ce que l'on réalise une simulation du réseau modifié par la panne, on introduit dans le réseau un flux vis-à-vis duquel le réseau ainsi modifié doit être dimensionné, et en ce que l'on réalise lesdites étapes de détection et, le cas échéant, d'identification et de modification précitées jusqu'à obtenir un dimensionnement conforme au flux sur ce réseau modifié.

Selon un cinquième aspect, l'invention concerne l'utilisation du procédé tel qu'exposé pour la simulation d'un réseau de transport de données en mode paquet.

De préférence, on élabore le flux avec une granularité intermédiaire entre la granularité du paquet et les granularités intrinsèques de commutation du réseau.

Selon sixième aspect, l'invention concerne l'utilisation du procédé tel qu'exposé pour la simulation d'un réseau de transport de données en mode circuit.

Selon un septième aspect, l'invention concerne un dispositif de simulation du comportement d'au moins un réseau comportant un ensemble d'éléments de réseau, caractérisé en ce qu'il comprend :
- Des moyens pour élaborer et introduire dans le réseau au moins un flux paramétré destiné à simuler une contrainte sur l'un au moins des éléments du réseau.
- Des moyens pour détecter le comportement du réseau en réponse à au moins une contrainte imposée par ce ou ces flux ;

Les aspects de l'invention évoqués supra dans le cadre du procédé selon l'un des premier au sixième aspects peuvent s'appliquer mutatis mutandis à ce dispositif et ne seront pas répétés par souci de concision.

L'invention et les avantages qui en ressortent apparaîtront plus clairement à la lecture de la description détaillée des modes de réalisation préférés, donnée seulement à titre d'exemple non-limitatif par référence aux dessins annexés, dont :
- la figure 1 est un schéma synoptique des différents blocs fonctionnels utilisés dans un outil de simulation de flux avec dimensionnement à la demande conforme à l'invention ;
- la figure 2A est un schéma montrant la nature des flux stochastiques et leur émission vers un réseau vierge durant le fonctionnement de l'outil de la figure 1 ;
- la figure 2B est une courbe montrant l'évolution dans le temps de la distribution d'intensité de flux stochastiques entre deux noeuds d'un réseau à simuler par l'outil de la figure 1, avec une échelle de temps macroscopique correspondant à une durée de cycle simulé ;
- la figure 2C est une courbe montrant l'évolution de l'intensité des flux stochastiques de la figure 2B, mais sur une échelle microscopique, de l'ordre du temps de transit d'un flux dans le réseau, avec des variations qui fluctuent de manière aléatoire ;
- la figure 3 représente le réseau de la figure 2A après un dimensionnement à la demande réalisé par l'outil de la figure 1 ; et
- la figure 4 représente un réseau analogue à celui de la figure 2A, sur lequel s'opère une simulation de panne à l'aide de l'outil de la figure 1.

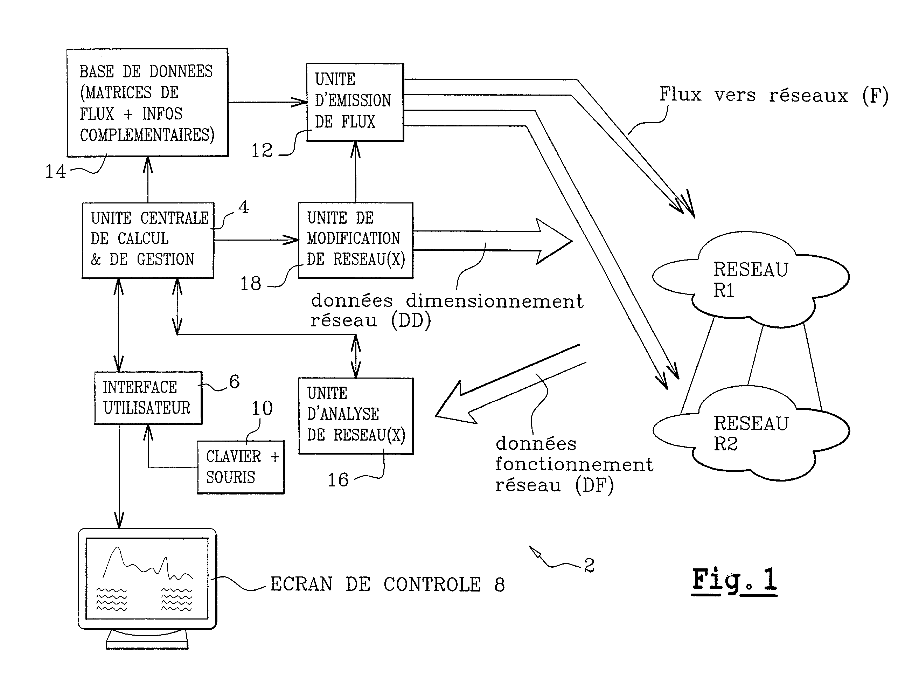

L'outil de simulation et de dimensionnement 2 représenté à la figure 1 comporte un ensemble de modules matériels et/ou logiciels qui dépendent fonctionnellement d'une unité centrale de calcul et de gestion 4, qui regroupe l'intelligence de l'ensemble. L'accès à l'outil 2 par un utilisateur s'opère par une interface utilisateur 6 à laquelle sont reliés un écran de contrôle 8 et un clavier associé à une souris 10.

L'unité centrale 4 commande, entre autres, trois unités qui interagissent avec un ou plusieurs réseaux R1, R2 analysés, à savoir :
- une unité d'émission de flux 12, qui transmet sous forme de flux F les données de simulation de trafic. Cette unité 12 est alimentée par une base de données 14 contenant des matrices de flux de simulation, décrites plus bas ;
- une unité d'analyse de réseau 16 qui recueille des données DF concernant le fonctionnement du/des réseau(x) simulé(s) ; et
- une unité de modification de réseau(x) 18, qui transmet des données DD de dimensionnement de réseau, notamment pour rehausser sélectivement le niveau de performance d'éléments de réseau en fonction des données de fonctionnement DF. Ces données servent notamment à réaliser le dimensionnement à la demande d'un réseau durant ou suite à une simulation.

Les flux F contenus dans la base de données 14 sont élaborés par l'unité centrale 4 en fonction de critères et de paramétrages établis par un utilisateur via le clavier 10 et l'écran 8 de l'interface 6, ou éventuellement par une source telle qu'un support d'enregistrement ou une connexion en ligne (non représentés). On note que la base de données 14 peut contenir des information complémentaires en plus de flux F.

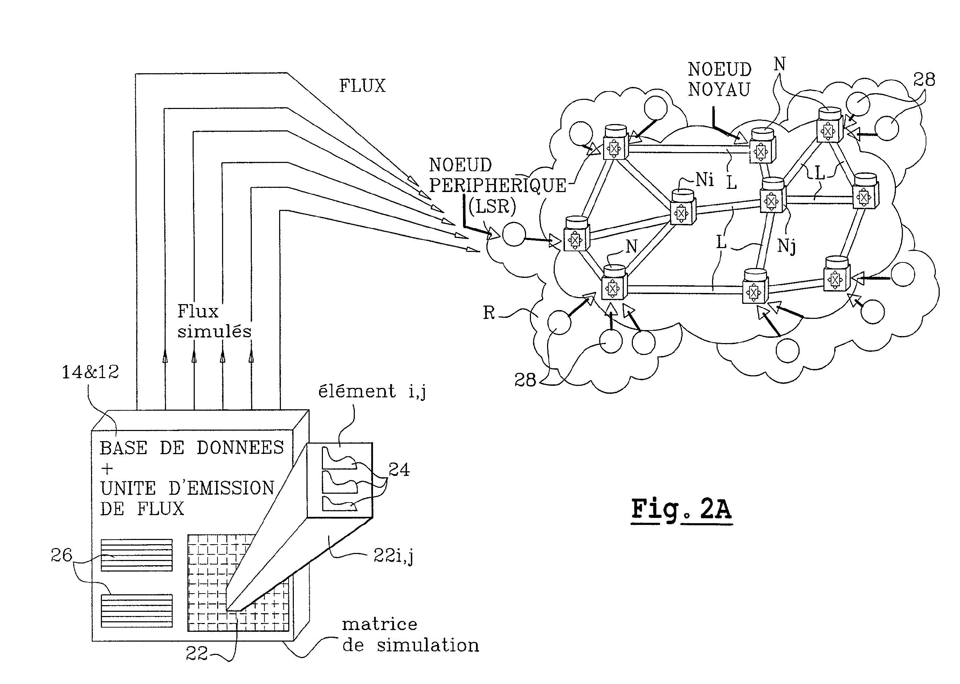

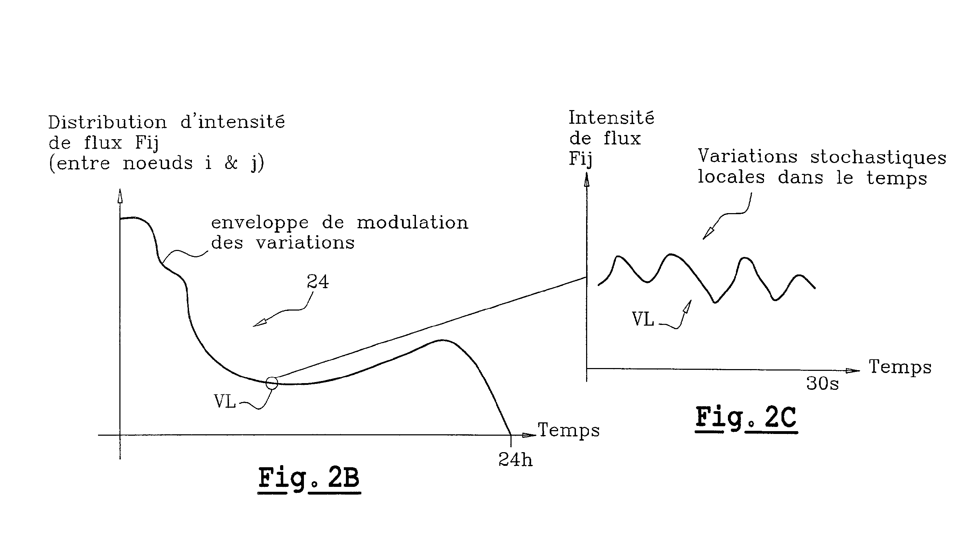

Un premier mode de fonctionnement de l'outil 2 pour réaliser la simulation d'un ou d'un ensemble de réseaux avec un éventuel dimensionnement à la demande, sera décrit par référence au schéma de la figure 2. Dans ce qui suit, on emploie par souci de simplicité le terme "réseau" de manière générique, qu'il s'agisse d'un seul réseau ou de plusieurs, interconnectés ou pas, pris en compte par l'outil 2. Dans l'exemple illustré, le réseau R est du type optique, fonctionnant en mode de multiplexage par division de longueur d'onde (connu par le terme anglo-saxon de WDM, pour "wavelength division multiplexing"), qui est une technologie permettant d'utiliser plusieurs longueurs d'ondes différentes dans une même fibre optique. Il est cependant bien entendu que l'outil 2 peut servir à tout autre type de réseau.

Plutôt que de simuler la propagation et de gérer chaque paquet dans le réseau, le concept utilise une nouvelle entité qui est le flux. La simulation consiste alors à mettre en oeuvre des procédés de modélisation de la distribution de trafic dans le réseau au moyen de flux F. Le flux F est une entité intermédiaire entre le paquet et les granularités intrinsèques de commutation. A l'échelle du réseau R, quasiment tout l'éventail de variation de trafic peut être appréhendé par la création dynamique de flux.

Un flux est défini par une ou plusieurs caractéristiques, telles que : les distributions dans le temps, soit des dates de début et des dates de fin, et la distribution spatiale, ou la répartition des flux dans le réseau. On peut aussi prendre en compte le routage, qui relève d'une analyse de matrice de trafic.

Les phénomènes qui se produisent au sein des flux peuvent être caractérisés de plusieurs manières différentes. A titre d'exemple, une approche simple et efficace de cette caractérisation consiste à attribuer au flux F :
- un débit moyen,
- une variance, et
- un paramètre qualitatif, notamment la classe de service requise par le flux en question.

La classe de service peut être du type dit "premium" pour véhiculer de la voix, ou du type "meilleur effort" (de l'anglais "best effort") pour véhiculer des données.

La caractérisation par la moyenne et la variance des flux correspond le mieux à des flux sporadiques (aussi désignés "bursty" en terminologie anglo-saxonne) spécifiques au trafic de données.

Les flux de simulation peuvent aussi s'appliquer à des types de données dits auto-similaires ("self-similar" en terminologie anglo-saxonne). Dans ce cas, les paramètres de caractérisation du flux sont de préférence la moyenne et/ou le paramètre dit de "Hurst", qui permet de mesurer le degré d'autocorrélation entre les arrivées de paquets.

Dans un réseau de type circuit, la caractérisation des flux est beaucoup plus simple, puisqu'on peut simuler directement des paramètres physiques qui conditionnent la transmission, tels que la longueur d'onde. On assimile alors les flux à des longueurs d'onde. Le débit sera donc fixe, et on ne joue que sur la distribution spatiale et la distribution temporelle de ces flux, non pas sur la caractérisation interne du flux.

Selon l'échelle de temps qu'il est prévu de simuler et de la durée d'utilisation des flux F, ces derniers peuvent être représentatifs :
- soit de l'application au niveau le plus bas : il peut alors s'agir d'un trafic engendré par une application particulière (cas d'un micro flux),
- soit des hypothèses qui en font une agrégation de flux ou de micro flux. Ces derniers peuvent relever d'un système de trafic issu d'un réseau local du type LAN (de l'anglais "local area network").

On peut envisager d'appliquer, pour des débits différents, des cibles différentes en termes de volume, avec ou sans agrégation. Ensuite, la différence va caractériser et empaqueter deux types d'informations : la manière dont on obtient des performances au niveau des noeuds et la manière dont on les utilise ensuite. Cette dernière sera subordonnée aux données qui seront exploitées effectivement pour établir le dimensionnement du réseau suite à la simulation.

Du point de vu scientifique, il est plus difficile de caractériser fidèlement une agrégation qu'un micro flux isolément, puisque l'agrégation implique généralement des multiplexages statistiques, les capacités des mémoires tampon, et autres disciplines de service concernant les noeuds. Cela explique pourquoi le comportement déterministe d'une agrégation de flux dans un réseau n'est pas envisagé dans l'état de la technique.

Le processus de simulation utilise pour les flux F des matrices stochastiques 20 dont chaque élément 22 exprime le trafic moyen entre deux noeuds N spécifiques. Le trafic moyen de flux est spécifié en termes de distribution d'intensité sur une échelle de temps, qui peut être à long terme, correspondant par exemple un cycle journalier de 24 heures. Ainsi, la matrice 20 comporte pour chaque élément 22 des informations qui peuvent être représentées sur une courbe 24 de distribution d'intensité à partir de laquelle on effectue un tirage aléatoire avec une distribution locale dans le temps.

La figure 2B donne un exemple de courbe 24 de distribution d'intensité pour l'élément 22ij de la matrice 20 qui, conformément au formatage des colonnes et des rangées de celle-ci, concerne le flux Fij entre les noeuds N désignés Ni et Nj (figure 2A). La matrice 20 comporte donc un nombre E² de tels éléments pour simuler un réseau comprenant un nombre E de noeuds.

L'intensité du flux, en unités déterminées, est indiquée en ordonnée contre l'échelle temps en abscisse. La courbe 24 montre plus particulièrement la modulation, ou l'enveloppe, des variations de l'intensité du flux, sa forme étant lissée sur la période du cycle (ici 24 heures), qui correspond à l'échelle macroscopique.

Cependant, la valeur instantanée de l'intensité d'un flux est fixée par une modélisation stochastique. Ainsi, pour une courte période du cycle, l'intensité va varier de manière aléatoire ou pseudo aléatoire dans des contraintes fixées par la modulation de la courbe 24.

La figure 2C représente à titre illustratif sur des axes analogues à celles de la figure 2B les variations locales de l'intensité du flux à un intervalle VL de la courbe 24, mais à une échelle microscopique (en l'occurrence 30 secondes) pour couvrir des fluctuations d'intensité sur une période de l'ordre de la duré du flux dans le réseau. On remarque que sur cette échelle microscopique, les variations peuvent présenter des excursions significatives.

Ainsi, on dispose de différentes échelles de temps qui sont contenues par la matrice de modélisation de trafic selon que l'on considère l'évolution sur des échelles de temps macroscopiques ou microscopiques.

Plus particulièrement, pour chaque couple de noeuds (par exemple Ni et Nj), la matrice stochastique 20 définit :
- la modulation de la distribution de trafic dans la journée (pour un cycle journalier), ce qui correspond à une première distribution à l'échelle macroscopique (figure 2B); et
- les fluctuations stochastiques quantifiées pour des courts instants successifs, ce qui correspond à l'échelle microscopique.

Les fluctuations stochastiques peuvent être produits à par tirage pseudo aléatoire selon une distribution exponentielle de la durée du flux, notamment selon une distribution poissonnienne (selon une distribution de Poisson) ou analogue. Pour réaliser ces variations stochastiques, l'unité d'émission de flux 12 comporte des moyens de tirage aléatoire ou pseudo aléatoire qui effectuent des tirages successifs suivant une périodicité suffisamment rapprochée dans le temps pour simuler des variations réalistes. Chaque tirage donne lieu à une variation instantanée et aléatoire, suivant la distribution de Poisson, de la valeur d'intensité du flux indiquée généralement par la courbe 24 suivant l'échelle macroscopique.

De la sorte, les courbes d'intensité de flux F ne donnent pas des éléments de flux déterministes, mais des probabilités, selon des courbes de Poisson, par exemple, ce qui permet de conférer au flux F leur caractère stochastique.

Du fait que l'on travaille avec des arrivées de flux F stochastiques, les échantillons permettant de déterminer la solidité du réseau sont aussi d'ordre statistiques.

Chaque élément 22 de la matrice 20 contient des informations analogues qui gouvernent les arrivées de flux stochastiques de leur paire respective de noeuds.

On note que plusieurs séries de telles informations peuvent être associées à chaque noeud, chacune associée à un type de flux à modéliser entre une paire de noeuds. Ainsi, dans l'exemple de la figure 2A, l'élément 22ij de la matrice 20 est représenté comme comportant trois courbes 24, chacune analogue à celle des figures 2B et 2C, et chacune associée à un type de service particulier.

On peut ainsi simuler des effets jour/nuit sur un grand réseau continental, tout en respectant un cahier des charges réaliste concernant des arrivées de flux, des demandes de connexion, des traitement d'appels "voix" ou en paquets, etc.

On crée ainsi une base de calcul qui sera exécutée suivant les hypothèses d'intensité de trafic pour une journée donnée et suivant les distributions sur le court terme.

D'autres informations qualitatives et quantitatives utilisées pour la caractérisation des flux F sont représentées schématiquement par des cases 26 dans l'ensemble désignant la base de données et l'unité de d'émission de flux 14, 12 de la figure 2A. Ces informations complémentaires peuvent concerner :
- la nature des types de trafic,
- les classes de services concernées,
- les débits typiques, les durées typiques et autres paramètres fixant les règles de tirage aléatoire pour former les flux stochastiques, etc.

Pour chaque élément 22 de la matrice 20, on extrait ainsi le flux stochastique correspondant pour l'intégrer dans le noeud N concerné du réseau R.

Dans l'exemple, le réseau comprend deux types de noeuds :
- des noeuds du noyau du réseau ("core nodes" en terminologie anglo-saxonne), qui ne communiquent pas directement avec des routeurs, mais seulement avec d'autres noeuds; et
- des noeud d'accès périphérique ("edge nodes" en terminologie anglo-saxonne) qui constituent des voies d'accès. Ces noeuds, repérés par des pastilles blanches 28 dans la figure 2A, sont reliés à des routeurs, en l'occurrence du type LSR (du terme anglo-saxon "label switching router").

Il s'agit d'un routeur IP qui peut également travailler en mode MPLS (de la terminologie anglo-saxonne "multi-protocol label switching"), qui est la manière actuelle d'utiliser le réseau Internet avec des approches orientées connexion. Les LSR génèrent des LSP (du terme anglo-saxon "label switch pass") orientés connexion, à l'instar du mode de transfert asynchrone dit ATM (de la terminologie anglo-saxonne "asynchronous transfer mode") ou la technique "frame relay", entre deux points. La notion de flux mise en oeuvre permet ainsi de respecter fidèlement la conception de réseau, puisque cette dernière utilise de connexions virtuelles entre deux points que l'on peut aussi caractériser. Ainsi, l'approche de l'invention se prête naturellement à la réalité de réseaux actuels.

Dans le cas de figure 2A, l'ensemble des routeurs 28 servira à recevoir les différents flux et à les distribuer selon un algorithme de routage du réseau.

Par ailleurs, on peut réaliser au préalable les hypothèses des lieus d'entrée des flux dans le réseau lorsque l'on n'utilise pas de routeurs. On procède alors à des opérations de multiplexage et de détermination de la bande passante nécessaire.

L'évaluation de la bande passante pour l'agrégation, notamment entre un réseau électronique et un réseau optique, nécessite de réaliser une cartographie des flux dans des longueurs d'onde. Cela implique une adaptation par des interfaces des flux à l'interface entre le routeur et le noeud auquel il communique.

A partir de ces flux stochastiques F produits par l'unité d'émission de flux 12, on analyse le comportement du réseau R grâce aux données DF recueillies par l'unité d'analyse 16.

A l'arrivée des flux stochastiques dans le réseau R, on observe la capacité des noeuds (et éventuellement des liens L) à les traiter. La capacité de traitement en question comprend non seulement la capacité "brute" mais, le cas échéant, aussi des fonctions de type "conversion" pour des réseaux optiques ou analogues.

Si le flux F ne peut pas passer dans le réseau, on rehausse le noeud à l'origine du blocage le biais de ces données de dimensionnement DF de l'unité de modification 18.

On procède ainsi à un dimensionnement à la demande, la demande étant occasionnée par les flux de simulation.

Toutes ces arrivées stochastiques de flux dans le réseau vont, sur un échantillon représentatif, donner lieu à un dimensionnement nécessaire du réseau pour faire passer les hypothèses de trafic posées à l'origine.

Du fait de la nature statistique des échantillons de flux fournis dans le réseau, on peut exécuter le processus de manière itérative avec des échantillons qui représentent plusieurs cycles de l'échelle de temps modélisé, par exemple 100 fois une journée. A chaque itération du processus, la matrice 20 émettra des flux dont la distribution d'intensité à l'échelle macroscopique sera la même (figure 2B), mais avec des variations stochastiques locales différentes à l'échelle microscopique (figure 2C).

Les itérations sont poursuivies jusqu'à permettre d'obtenir un degré de confiance suffisant en la simulation. Pour chaque cycle de simulation répété, il y aura un nombre important (par exemple de l'ordre d'un million) de tirages. Le niveau de confiance est donc fonction de la taille de l'échantillon et du nombre du cycles (soit la durée de la simulation).

Par ailleurs, le temps de la simulation sera variable suivant la finesse de la granularité que l'on simule (pouvant varier par exemple d'un micro flux à 10 kbits/s à des trafics agrégés de plusieurs Mbits/s), du fait que la granularité conditionne la quantité de flux à simuler.

Dans un mode de réalisation pratique, il est envisageable, avec les moyens de traitement actuels, de simuler ainsi des dizaines de millions de sources de micro flux, qui seront ensuite agrégés et transportés dans le réseau.

La simulation sur la base de flux F peut entre autres :
- modéliser le trafic transmis par une application (voix, vidéo, transfert de fichier, HTTP,...);
- modéliser une agrégation de micro-flux (sortie d'un réseau local du type LAN (du terme anglo-saxon "local area network), etc.) ;
- être spécifié par un ensemble de paramètres de modélisation du comportement du trafic (taux moyen de passage, caractère sporadique, modèles mathématiques, MMP, auto-similaires, CoS, VPN, ...); etc.

Toutefois, le comportement au niveau paquet demeure implicite et n'est pas simulé, ce qui signifie que le nombre d'événements à simuler est inférieur de plusieurs ordres de grandeur par rapport à une modélisation au niveau paquet telle qu'utilisée dans certaines approches classiques.

Les propriétés des flux peuvent être gérées en fonction de nombreuses distributions différentes (arrivage de flux, durées de flux, destination de flux, mise à jour dynamique de paramètres avec TCP (du terme anglo-saxon "transport control protocol), etc.

La technique de simulation peut être vue comme incorporant les étapes suivantes :
i) introduction d'un flux stochastique F de simulation dans le réseau;
ii) détection des performances du réseau face à ce flux stochastique F; et
iii) rehaussement des éventuelles parties faibles ou inadéquates du réseau pour traiter le flux imposé.

Ces étapes peuvent se poursuivre de manière interactive, avec l'étape iii) de rehaussement déclenchée automatiquement en fonction de l'étape ii) de détection, l'étape i) d'introduction de flux pouvant se dérouler indépendamment et en concomitance selon un programme déterminé,

La simulation peut être apportée sur un réseau R dit vierge, c'est-à-dire avec un stricte minimum de caractéristiques préétablies, soit la topologie initiale, caractérisée par un ensemble de noeuds N et des liens L entre ces derniers. Les capacités des noeuds N et des liens ne sont pas spécifiées pour ce réseau vierge: il s'agit seulement d'un modèle de réseau et de noeuds avec un ensemble de limites, mais sans capacité.

L'idée est d'apporter par les flux stochastiques F des contraintes dans le réseau R pour déceler ses besoins et modifier les limites.

En réponse aux contraintes de flux, les fonctions et capacités respectives du réseau seront mis à jour à la demande (par un rehaussement ciblé de performances via les données de dimensionnement DD). Ces rehaussements peuvent prendre en compte potentiellement de nombreux paramètres, tels que la performance des noeuds au niveau paquet, la qualité de service, les priorités, etc. De ce fait, les données de dimensionnement DD sont établies non seulement en fonction des données de fonctionnement DF recueillies, mais aussi en fonction de paramètres externes, par exemple selon un cahier des charge évolutif intégré implicitement dans le flux.

La figure 3 illustre schématiquement le réseau R initialement vierge de la figure 2A après son dimensionnement à la demande par le processus précité. On observe que certains des noeuds N et liens L ont subis un rehaussement de niveau de performances, notamment en termes de capacité, indiqué par les flèches désignées respectivement RN et RL.

Les données de dimensionnement DD sont établies, selon un protocole déterminé, pour indiquer à la fois : i) le lieu du réseau spécifique à dimensionner (désignation de noeud(s) ou de lien(s) particulier(s)), ii) la caractéristique concernée par le dimensionnement (capacité, vitesse, nombre ports, etc.), et iii) la quantification de cette caractéristique (par exemple un pourcentage d'augmentation, une nouvelle valeur de capacité, etc.). Les données de dimensionnement peuvent aussi spécifier un ajout ou un déplacement d'un noeud ou d'un lien en utilisant un protocole de signalisation préétabli.

On note que l'invention est remarquable par sa possibilité de gérer le réseau tel que cela se ferait avec des protocoles et des techniques d'ingénierie de trafic ou de gestion réalistes, alors même qu'il est en phase de conception.

Tout événement dynamique lié à la gestion, au contrôle de trafic, aux fautes (qui ont un retentissement sur l'architecture du réseau), etc. peut être simulé par cette approche.

L'une des actions typiques du dimensionnement dynamique concerne la capacité de rehausser sélectivement la capacité des noeuds N. Selon cette approche, il est possible de prendre en compte différentes granularités de rehaussement, y compris le cahier des charge actuel du constructeur du réseau.

L'approche selon l'invention, basée sur une analyse du flux, constitue une solution qui peut être qualifiée d'intermédiaire, permettant de rester fidèle à des dynamiques de protocole de routage et de prendre en compte des éléments dynamiques intervenant sur le réseau, tels que des pannes, des algorithmes d'ingénierie de trafic, du contrôle de flux, etc.

De nos jours, on cherche à créer des réseaux du type dit "multi-granularité", où l'on intègre les différentes couches et différentes étapes dans le réseau, avec agrégation pour créer des trafics qui sont commutés selon différentes techniques.

Le processus utilisé conformément à l'invention permet d'appliquer dès la construction du réseau des protocoles qui souvent sont adoptés actuellement a posteriori. Par exemple, si on met en oeuvre dans le réseau une technique d'équilibrage des charges (connue par le terme anglais "load balancing"), on aura un protocole qui a pour fonction de fractionner le trafic pour le distribuer sur plusieurs chemins. Cette technique pourra alors être prise en compte dès le dimensionnement du réseau.

Cela est possible du fait que l'on simule des entités qui sont relativement fines et sur lesquelles on peut appliquer des protocoles réels.

Il peut être prévu en outre de pouvoir modifier de manière dynamique, en fonction de la simulation, la structure même du réseau, notamment en ajoutant ou en ôtant des noeuds et des liens. Cela suppose une interaction entre des mécanismes dits "hors ligne" et centralisés, pas impliqués directement dans le processus de simulation (mécanismes dit "off line" en terminologie anglo-saxonne), et des mécanismes enligne distribués fonctionnant en temps réel (dits "on-line" selon cette même terminologie). Dans ce cas, on peut réaliser une analyse hors-ligne via un noeud adapté à cet effet, par exemple doté d'une fonction d'analyse de l'état du réseau, et notamment de la distribution du trafic. Par ce noeud, on pourra alors changer de manière dynamique la topologie du réseau, notamment en établissant au moins une liaison supplémentaire entre deux noeuds.

Par rapport aux techniques classiques qui ne simulent le plan de contrôle du réseau qu'au niveau des noeuds, l'invention permet en outre de prévoir le plan d'attaque avec son impact au niveau du dimensionnement, et ce dans un même outil et dans le cadre d'un même processus.

Dans le mode de réalisation avec dimensionnement à la demande, l'outil intervient notamment dans deux cas :
- dans le cas d'un réseau vierge, tel que décrit plus haut, où il effectue un calcul complet du dimensionnement à la demande (puisqu'il permet d'approvisionner en temps réel les moyens à doter aux différents noeuds), et
- dans le cas d'un réseau déjà dimensionné, où il utilise seulement des performances de différents algorithmes et protocoles.

Il est aussi possible de réaliser des simulations rebouclées, où le résultat d'un réseau dimensionné lors d'une simulation antérieure fait de nouveau l'objet d'une simulation, soit avec les même flux stochastiques (au facteur aléatoire prêt), soit avec de nouveaux paramétrages de flux. Ce rebouclage peut être répété un nombre arbitraire de fois jusqu'à obtenir un réseau conforme pour différentes possibilités de flux.

Cela permet d'observer le réseau à une autre échelle de temps plus importante, par exemple sur des années alors que la matrice de flux est basée sur des cycles journaliers.

En général, on dispose d'une matrice de trafic qui est dynamique, qui représente des variations dans le temps sur une échelle d'une journée. Mais un opérateur souhaite souvent connaître l'évolution du réseau sur plusieurs années. Quand on a dimensionné un réseau sur la base d'une matrice de trafic donnée, on peut prendre l'hypothèse par exemple qu'un nombre donné de mois plus tard la matrice aura évolué par un certain facteur multiplicatif. On repart alors du résultat précédant et on applique de nouveau le même principe de rehaussement sélectif des performances des noeuds, mais en partant d'une situation donnée qui n'est par un réseau vierge, étant celui qui résulte d'une première simulation.

Une telle possibilité est ouverte du fait que les sorties peuvent être des entrées, au niveau du réseau : noeuds, protocoles utilisés, liens, et paramètres physiques le cas échéant.

Selon un aspect optionnel, l'outil est aussi capable de simuler des pannes de réseau de façon dynamique. Suivant des algorithmes de protection et de restauration, on crée de façon aléatoire ou exhaustive des pannes dans le réseau qui produiront des besoins supplémentaires en capacité dans les noeuds et les liens sur lesquels le trafic sera re-routé. Cet aspect est pris en compte dans la phase de simulation. Dans une simulation dynamique, les ressource supplémentaires requises seront déterminées par des algorithmes de schéma de restauration ou de protection et appliquées en temps réel.

A titre d'exemple, la figure 4 illustre une panne simulée sur un lien entre deux noeuds noyau du réseau. Le routage sur le réseau R impose en réponse une surcharge sur les liens de délestage qui permettent de relier ces deux noeuds. L'analyse vise alors à déterminer si ces liens et les noeuds impliqués peuvent assurer cette surcharge avec les flux simulés.

On peut aussi utiliser l'outil 2 pour réaliser des études comparatives suivant plusieurs approches, avec des schémas de protection appliqués de manière différente dans différents réseaux.

Les comparaisons techniques peuvent être obtenus aussi entre un mode paquet et un mode circuit, pour des topologies et trafics identiques, permettant d'aboutir à comparaisons de coûts en prenant en compte les coûts unitaires des composants utilisés.

Ainsi, l'outil peut être utilisé pour des études scientifiques (analyse de nouveaux noeuds, de nouveaux types de noeuds, ou de fonctions offertes, etc.), ou encore comme outil d'assistance de planification de réseau pour un opérateur.

L'invention s'applique à tout réseau de transport de flux, le terme flux étant pris son sens le plus large: elle couvre donc non seulement le transport de données informatiques et électroniques, mais aussi la distribution de l'énergie ou de services (gaz, électricité, téléphonie), ou d'entités matérielles, des réseaux de transport de véhicules (ferroviaire, routier, maritime, aérien), des flux monétaires dans un réseau macro ou microéconomique (échanges boursiers, transactions entre banques, commerces, etc), de flux de pièces ou de tâches dans l'industrie, etc.

Le principe de l'invention s'applique aussi bien pour des noeuds de type circuit, par exemple qui commutent des longueurs d'onde dans le cas d'un réseau optique), ou des commutateurs de paquets.

Dans le cas d'un mode circuit, il est relativement simple de savoir si un flux arrivant sur un noeud peut être commuté ou pas: pour reprendre l'exemple d'un réseau optique, soit il existe un port adapté à la longueur d'onde du flux entrant, dans lequel cas ce flux sera traité d'office, soit le noeud ne dispose pas d'un tel port et le flux sera refusé.

Dans le cas d'un commutateur de paquet, qu'il soit électronique ou optique, la situation est plus compliquée. En effet, lorsqu'un flux arrive sur noeud, ce dernier doit connaître la bande passante équivalente de flux entrant, plus celle de flux précédant avant de pouvoir déterminer si le flux entrant peut transiter. Cela résulte du fait qu'il s'opère des multiplexages statistiques, de la contention, des considérations de performance au niveau paquet, etc. qui n'existent pas au niveau circuit. Ces aspects sont pris en compte par un outil de simulation des caractéristiques du noeud en tant que tel. Les informations requises concernant le noeud, permettant d'accroître sa performance, peuvent être obtenues de façon analytique, par des tables de résultats, par des simulations spécifiques, et ce avec des degrés d'approximation divers suivant les performances, dont les techniques sont connues en elles-mêmes.

L'outil selon l'invention peut accepter en entrée ce type d'information, quelque soit son origine. De préférence, ces informations proviennent d'un outil analytique des caractéristiques du réseau, si disponible.

L'invention est particulièrement bien adaptée aux applications orientées connexion. On peut prendre en compte de manière dynamique des mécanismes de contrôle de congestion, qui changent en temps réel les paramètres du flux par rapport à des états observés dans le réseau. Cet aspect sera modélisé par le comportement au niveau du flux, sans descendre au niveau paquet.

Dans ce qui suit est présenté de manière résumé quelques uns des avantages et des particularités de l'outil 2 conforme à l'invention.

Valeur ajouté pour le développement d'un stratégie de réseau :
- résultats pertinents pour la comparaison et l'orientation d'architectures de systèmes et de réseaux ;
- contrôle et gestion de l'évaluation pour des scénarios de protocoles existants ou nouveaux ;
- méthodes de conception et de planification efficaces et originales pouvant s'appliquer à des modèles sur le court terme ou sur le long term.

Solution pour des études typiques de création de réseau complexes :
- prenant compte des aspects dynamiques (trafic, mécanismes de temps réel, ...);
- prenant compte des échelles (Terabit et réseau) ;
- incorporant un ensemble important de contraintes (physiques, de conversion, de protection, ...);
- acceptant tout modèle de fonctionnement Internet.

Simulateur de flux dynamique :
- représente la distribution du trafic dans un réseau au moyen de flux ;
- un flux est un entité intermédiaire entre un paquet et les granularités de commutation intrinsèques ;
- permet de modéliser le trafic transmis par une application (voix, vidéo, transfert de fichier, HTTP, ...);
- permet de modéliser une agrégation de micro-flux, (sortie de LAN, ...);
- peut être spécifié par un ensemble de paramètres modélisant le comportement de trafic (moyenne de taux de passage, nature sporadique, modèles mathématiques, MMPP, auto-similaires, ...), CoS, VPN, ...
- le comportement au niveau paquet reste implicite et n'est pas simulé, ce qui implique une diminution de plusieurs ordres de grandeur dans le nombre d'événements à simuler ;
- les propriétés des flux peuvent être gérées selon de nombreuses distributions (arrivées de flux, durées de flux, destination de flux, mise à jour dynamique de paramètres avec TCP, ...).

Contraintes appliquées sur un modèle de réseau par l'application stochastique de flux et d'événements dynamiques :
- dimensionnement à la demande (DàD) de la capacité (et éventuellement de la configuration) du réseau et de ses ressources ;
- les flux successifs sont traités dans le réseau (routage, répartition, ...) ;
- les ressources requises correspondantes sont rehaussées par rapport au service, aux protocoles ou à tout autre contrainte de conception ;
- toute optimisation peut être ajoutée à cette étape : soit une optimisation consommatrice de temps (optimisation de topologie, ...), contraintes ou anticipation d'une exploitation future de réseau selon technique dite de "pointage et validation" (du terme anglo-saxon "point and click" (VPN, ...);
- comportement en temps réel de la "vie" de réseau(x) :

- utilisation basée sur des ressources existantes ;
- application de scénarios de survie et de mécanismes d'ingénierie de trafic (approvisionnement dynamique, routage "intelligent", réglage dynamique, équilibrage de charge, cloisonnement de trafic, gestion de congestion, protocoles de signalisation, ...) ;
- évaluation préliminaire de performance au niveau du paquet ;
- impacts dynamiques visibles aux bords du réseau, avec performances des bords permettant l'évaluation de ressources équivalentes ;
- possibilité de rehausser les ressources du réseau aux besoins "exacts" :

- mise à jour du statut du réseau avec de nouveaux flux ;
- applicable à un large éventail d'algorithmes et de protocoles pour le routage et l'approvisionnement ;
- base de donnée de l'état des noeuds ;
- rehaussement de la dimension et des fonctionnalités des noeuds par rapport aux contraintes en termes de service, rehaussement de systèmes (transmission et commutation), évaluation de performance requise pour des routeurs du type OPS/OBSTout type de commutateur ou routeur de paquet/trames ;
- prise en compte possible de tout événement dynamique lié à la "vie" du réseau : ingénierie de trafic, pannes, ... ;

Potentiel de la simulation dynamique de flux :
- comparaisons (coûts, performances, ...) de solutions réseau ;
- systèmes (paquet vs. circuit), multigranularité, ...) ;
- architecture (paire vs. surcouches, topologies, ...) ;
- ingénierie de protocoles et de trafic ;
- évaluation de transparence potentielle dans le réseau ;
- évaluation de besoins en conversion ;
- évaluation de performances de restauration ;
- comparaison de stratégies de survie (quantité de ressources à ajouter) ;
- détermination du gain avec approvisionnement dynamique à des granularités différentes ;
- rendement de mécanismes de contrôle de congestion dans des réseaux de type Terabit ;
- compatibilité avec les évolutions futures (indépendance des éléments de modèle et des méthodes).

On comprendra de ce qui précède que l'invention autorise de nombreux différents modes de réalisation et de variantes.

## Revendications

1. Procédé de simulation du comportement d'au moins un réseau (R) comportant un ensemble d'éléments de réseau (N, L), **caractérisé en ce qu'**il consiste
• à élaborer et à introduire dans le réseau au moins un flux (F) paramétré destiné à simuler une contrainte sur l'un au moins des éléments du réseau (N, L) et
• à détecter le comportement du réseau en réponse à au moins une contrainte imposée par ledit au moins un flux (F) ;

2. Procédé selon la revendication 1, **caractérisé en ce que** l'on élabore le flux (F) sur la base d'une modélisation de la variation dans le temps de l'intensité de trafic dans le réseau (R) vis-à-vis du ou de chaque élément (N, L) auquel un flux est destiné dans le cadre de la simulation.

3. Procédé selon l'une quelconque des revendications 1 ou 2, **caractérisé en ce que** l'on élabore le flux (F) sous forme d'un ensemble de flux, dont chaque membre correspond à un trafic sur une portion de trajet élémentaire reliant une paire respective de noeuds (Ni, Nj) spécifiée du réseau (R).

4. Procédé selon l'une quelconque des revendications 1 à 3, **caractérisé en ce qu'**il comprend une étape de réalisation de matrice (20) de flux (F), dont chaque élément (24) exprime une variation dans le temps de l'intensité de flux sur une portion de trajet respective du réseau (R), les flux étant introduits dans le réseau conformément à cette matrice.

5. Procédé selon l'une quelconque des revendications 1 à 4, **caractérisé en ce que** l'on imprime sur le flux (F) une variation stochastique.

6. Procédé selon l'une quelconque des revendications 1 à 5, **caractérisé en ce que** le flux (F) exprime une variation d'intensité de trafic sur une échelle de temps macroscopique (figure 2B) relativement à la durée de son transit dans le réseau (R).

7. Procédé selon la revendication 6, **caractérisé en ce que** la variation porte sur des évolutions de flux sur une échelle de temps macroscopique simulant plusieurs heures d'utilisation réelle du réseau, notamment sur un cycle d'exploitation journalier du réseau simulé.

8. Procédé selon la revendication 6 ou 7, **caractérisé en ce que** l'on crée pour un flux (F) une modulation d'intensité (24) à l'échelle macroscopique à laquelle on impose des variations stochastiques locales de flux (F) sur une échelle de temps microscopique (figure 2C).

9. Procédé selon l'une quelconque des revendications 5 à 8, **caractérisé en ce que** la variation stochastique du flux (F) est établie conformément à une distribution exponentielle, de préférence une distribution de Poisson.

10. Procédé selon l'une quelconque des revendications 1 à 9, **caractérisé en ce que** l'on caractérise le flux par au moins l'un des paramètres suivants :
- un débit moyen,
- la variance du débit,
- le paramètre de Hurst, et
- un paramètre qualitatif, notamment la classe de service requise par le flux.

11. Procédé selon l'une quelconque des revendications 1 à 10, **caractérisé en ce qu'**il comporte en outre les étapes de :
- identification (DF) d'une éventuelle faiblesse d'au moins un élément (N, L) face à ladite contrainte, et
- modification (DD) le cas échéant d'au moins un élément témoignant de ladite faiblesse de façon à lui permettre d'accommoder la contrainte l'ayant révélée, notamment en rehaussant le dimensionnement d'une caractéristique de performance de l'élément.

12. Procédé selon la revendication 11, **caractérisé en ce que** lesdites étapes de détection, d'identification et de modification sont exécutées en concomitance avec l'introduction de flux (F) dans le réseau.

13. Procédé selon l'une quelconque des revendications 1 à 12, **caractérisé en ce que** l'élément du réseau (R) est un noeud (N) et/ou un lien (L).

14. Procédé selon l'une quelconque revendication 1 à 13, **caractérisé en ce que** l'on réitère au moins une fois l'introduction de flux (F) dans le réseau (R) afin de simuler à chaque itération une variation statistique du flux (F), cette variation statistique étant obtenue notamment sur la base de la nature stochastique du flux.

15. Procédé selon l'une quelconque des revendications 11 à 14, mis en oeuvre pour établir le dimensionnement des performances d'un réseau initialement vierge pour lequel est spécifié une topologie de noeuds (N) et de liens (L), **caractérisé en ce que** l'on introduit dans le réseau (R) un flux (F) vis-à-vis duquel il doit être dimensionné, et **en ce que** l'on réalise lesdites étapes de détection, d'identification et de modification jusqu'à obtenir le dimensionnement conforme au flux (F).

16. Procédé selon l'une quelconque des revendications 11 à 14, mis en oeuvre pour établir un nouveau dimensionnement des performances d'un réseau existant, **caractérisé en ce que** l'on introduit dans le réseau (R) un flux (F) vis-à-vis duquel il doit être dimensionné, et **en ce que** l'on réalise lesdites étapes de détection et, le cas échéant, d'identification et de modification jusqu'à obtenir un dimensionnement actualisé conforme au flux (F).

17. Procédé selon l'une quelconque des revendications 11 à 14, mis en oeuvre pour la établir un dimensionnement des performances d'un réseau (R) face à une panne simulée, **caractérisé en ce que** l'on réalise une simulation du réseau modifié par la panne, on introduit dans le réseau (R) un flux (F) vis-à-vis duquel le réseau ainsi modifié doit être dimensionné, et **en ce que** l'on réalise lesdites étapes de détection et, le cas échéant, d'identification et de modification jusqu'à obtenir un dimensionnement conforme au flux (F) sur ce réseau modifié.

18. Procédé selon l'une quelconque des revendications 1 à 17, **caractérisé en ce qu'**il est utilisé pour la simulation d'un réseau (R) de transport de données en mode paquet.

19. Procédé selon la revendication 18, **caractérisé en ce que** l'on élabore le flux (F) avec une granularité intermédiaire entre la granularité du paquet et les granularités intrinsèques de commutation du réseau (R).

20. Procédé selon l'une quelconque des revendications 1 à 17, **caractérisé en ce qu'**il est utilisé pour la simulation d'un réseau (R) de transport de données en mode circuit.

21. Dispositif (2) de simulation du comportement d'au moins un réseau (R) comportant un ensemble d'éléments de réseau (N, L), **caractérisé en ce qu'**il comprend :
• des moyens (4, 12, 14) pour élaborer et introduire dans le réseau au moins un flux (F) paramétré destiné à simuler une contrainte sur l'un au moins des éléments du réseau (N, L).
• des moyens (16) pour détecter le comportement du réseau en réponse à au moins une contrainte imposée par ledit au moins un flux (F) ;

22. Dispositif selon la revendication 21, **caractérisé en ce qu'**il comprend des moyens (4) de modélisation de la variation dans le temps de l'intensité de trafic dans le réseau (R) vis-à-vis du ou de chaque élément (N, L) auquel un flux est destiné dans le cadre de la simulation.

23. Dispositif selon l'une quelconque des revendications 21 ou 22, **caractérisé en ce qu'**il comprend des moyens (4) d'élaboration du flux (F) sous forme d'un ensemble de flux, dont chaque membre correspond à un trafic sur une portion de trajet élémentaire reliant une paire respective de noeuds (Ni, Nj) spécifiée du réseau (R).

24. Dispositif selon l'une quelconque des revendications 21 à 23, **caractérisé en ce qu'**il comprend des moyens pour imprimer sur le flux (F) une variation stochastique.

25. Dispositif selon l'une quelconque des revendications 21 à 24, **caractérisé en ce que** le flux (F) exprime une variation d'intensité de trafic sur une échelle de temps macroscopique (figure 2B) relativement à la durée de son transit dans le réseau (R).

26. Dispositif selon la revendication 25, **caractérisé en ce que** la variation porte sur des évolutions de flux sur une échelle de temps macroscopique simulant plusieurs heures d'utilisation réelle du réseau, notamment sur un cycle d'exploitation journalier du réseau simulé.

27. Dispositif selon la revendication 25 ou 26, **caractérisé en ce qu'**il comprend des moyens (4) pour créer une modulation d'intensité (24) du flux (F) à l'échelle macroscopique et des moyens (4) pour imposer des variations stochastiques locales de flux (F) sur une échelle de temps microscopique (figure 2C).

28. Dispositif selon l'une quelconque des revendications 24 à 27, **caractérisé en ce que** les moyens pour imprimer la variation stochastique produisent une variation conformément à une distribution exponentielle, de préférence une distribution de Poisson.

29. Dispositif selon l'une quelconque des revendications 21 à 28, **caractérisé en ce qu'**il comporte en outre :
- des moyens (4) pour identifier (DF) une éventuelle faiblesse d'au moins un élément (N, L) face à ladite contrainte, et
- des moyens (18) pour modifier (DD) au moins un élément témoignant de ladite faiblesse de façon à lui permettre d'accommoder la contrainte l'ayant révélée, notamment en rehaussant le dimensionnement d'une caractéristique de performance de l'élément.

30. Dispositif selon l'une quelconque des revendications 21 à 29, **caractérisé en ce que** le flux (F) possède une granularité intermédiaire entre la granularité de paquet transporté par le réseau (R) et les granularités intrinsèques de commutation du réseau (R).
